# EUROPEAN PATENT SPECIFICATION

(11) **EP 0 402 131 B1**
(45) Date of publication and mention of the grant of the patent: **20.10.1993**
(21) Application number: 90306184.4
(22) Date of filing: 07.06.1990
(51) Int. Cl.: F24F 3/00, F25D 16/00, F25B 29/00

(54) **Cooling system with supplemental thermal storage**
Kühlanlage mit Zusatzwärmespeicher
Installation frigorifique avec accumulateur thermique supplémentaire

(30) Priority: 07.06.1989 US 362966
(43) Date of publication of application: 12.12.1990
(73) Proprietor: BALTIMORE AIRCOIL COMPANY, INC., Jessup Maryland 20794 (US)
(72) Inventor: Osborne, William T., Severn, Anne Arundel MD 21144 (US)
(74) Representative: Boyes, Kenneth Aubrey

(56) References cited:
- DE-A- 3 704 182
- JP-A-63 116 055
- US-A- 4 637 219

## Description

The present invention relates generally to an air cooling system, and more particularly, to an air cooling system with the capability to provide supplemental cooling through the use of a thermal storage device.

Mechanical air cooling or air conditioning systems are well known and are in use in most commercial or office buildings. Such air conditioning systems typically have demands or loads that vary considerably with the outdoor conditions including the degree of sunlight, temperature and humidity and also with the building occupancy. The greatest demand on such systems usually occurs in the afternoon hours when the combined effects of these influences are most severe. Most commercial and office buildings are closed during the late evening and nighttime hours, and consequently, the demand on the air conditioning system varies from a peak in the afternoon period to the very low or zero demand during the evening and nighttime hours.

It is accordingly desirable to provide an air cooling or air conditioning system that can provide desired air conditioning to a commercial building during normal warm outdoor conditions and yet also have a sufficient reserve supply to provide adequate air conditioning to the building during peak conditions during unusually warm, sunny and humid outdoor conditions. One way to provide such an air conditioning system is to size the system such that the peak demand can be mechanically met by the various system components. However, this is undesirable from a installation cost point of view due to the capital investment required for system components such as compressors, condensers, interconnecting piping and electrical wiring and switchgear. Another consideration is the relatively high cost to operate such systems due to the demand charge that may be levied by the electrical authorities dependent on the maximum instantaneous electrical demand of the compressor when in fact the maximum electrical draw is only required for a relatively few days during the cooling season. The operating cost is an even greater consideration in regions where the authorities penalize units of electricity consumed in the afternoon with time-of-day pricing.

Another more desirable method of meeting the peak system cooling demands without necessarily sizing all of the system components to meet the peak cooling demand is to utilize supplemental thermal storage. The term thermal storage when applied to cooling systems actually refers to the storage of cooling capacity, usually in the form of a frozen phase change material which is utilized to further chill a liquid used in the air cooling or air conditioning system. One recent disclosure of such a system for storing cooling capacity is set forth in U.S. Pat. No. 4,720,984. This patent recognizes the reduced cooling needs for a building during nighttime hours and discloses the use of the chilled water outlet of a cooling tower to freeze a phase change material during such nighttime hours. The phase change material is said to be included in a storage tank containing packages of a salt composition phase change material having a freezing-melting point above the temperature of the chilled liquid emerging from the cooling tower. When the packages of the salt compositions are frozen, the phase change material can be remelted during the following peak building cooling demand by providing additional chilling to the water exiting the cooling tower by allowing such water to pass through the tank in close proximity to the packaged phase change material and exiting from the tank. The phase change material is accordingly remelted and assists the mechanical chiller in the cooling of the water in the building loop. Such system requires the use of an intermediate water loop, the major components of which are a cooling tower, a chiller, and a thermal storage tank, to transfer the cooling effect from the cooling equipment to the building.

US Patent No. 4,637,219 sets forth a system, as discussed in the preamble of claim 1, utilizing thermal storage which does not require the use of an intermediate water loop. This system achieves a reduction in peak energy consumption by using the stored "cool" thermal energy to condense the high pressure refrigerant during the periods of high outside temperatures. As a result of this low temperature condensing, the required power for the air conditioning system is reduced and peak energy reduction is accomplished. However, there is a risk when using this system of supplying liquid refrigerant to the compressor, thus damaging it.

Another approach not requiring an intermediate water loop which has been used to reduce peak power consumption and which avoids the above-mentioned risk of damage to the compressor is described in Japanese Patent No. 63-116055. The system described is a liquid overfeed system. Such systems use a low pressure reservoir to, firstly, improve distribution to the individual evaporator tubes by ensuring that only liquid is provided to the evaporator inlet, and secondly, to protect the compressor by ensuring that only refrigerant in the gas phase is fed thereto. Although liquid overfeed systems serve useful functions, such systems are costly and cannot be economically employed in air conditioning systems in the small to mid-size range.

Accordingly, it is an object of the present invention to provide an air cooling system having supplemental thermal storage capacity which does not require the use of an intermediate water loop or a liquid overfeed system.

It is another object of the present invention to provide an efficient air cooling system having supplemental thermal storage capability that need only be utilized when required to provide additional cooling capacity.

From one aspect the invention provides a cooling system comprising a compressor means having an inlet and an outlet for a working fluid, a condenser means having an inlet and an outlet for a working fluid, an evaporator means having an inlet and an outlet for a working fluid, and a thermal storage means having an inlet and an outlet for a working fluid, the compressor means outlet being connected to the condenser means inlet, and the system further comprising means for selecting one of three modes of operation, the modes comprising: a first mode wherein the condenser means outlet is connected to the evaporator means inlet bypassing the thermal storage means; a second mode wherein the condenser means outlet is connected to the thermal storage means, the thermal storage means being connected to the compressor means inlet bypassing the evaporator means, and a third mode wherein the condenser means outlet is connected to the thermal storage means inlet, the thermal storage means outlet being connected to the evaporator means inlet; and characterised in that in the second mode, the condenser means outlet is connected to the thermal storage means outlet and the thermal storage means inlet is connected to the compressor means inlet, such that in the second mode the direction of flow of the working fluid through the thermal storage means is opposite to the direction of flow in the third mode.

Viewed from another aspect the invention provides a method for providing supplemental cooling for an air conditioning system comprising the steps of: storing cooling capacity, during periods of no cooling demand, by flowing a working fluid output from a condenser means through a thermal storage means before inputting the working fluid to a compressor means bypassing an evaporator means; and further cooling the working fluid, during periods of high cooling demand, by flowing the-working fluid output from the condenser means through the thermal storage means to sub-cool the working fluid, before inputting the working fluid to the compressor means via the evaporator means; and characterised in that: in the step of further cooling the working fluid, the working fluid flows through the thermal storage means in a direction opposite to the direction of flow through the thermal storage means during the step of storing cooling capacity.

The present invention provides an air cooling or air conditioning system having the capacity to provide supplemental cooling when the air conditioning so requires it. Most typically, such an air cooling system would be applied in a commercial or office building having an air conditioning load that varies with the outdoor temperature, sunlight, and humidity conditions and building occupancy and which also has a daily unoccupied period usually at night, when air conditioning is not required.

As with most typical air conditioning systems, the system of the present invention comprises a compressor which could be any

The present invention provides an air cooling or air conditioning system having the capacity to provide supplemental cooling when the air conditioning so requires it. Most typically, such an air cooling system would be applied in a commercial or office building having an air conditioning load that varies with the outdoor temperature, sunlight, and humidity conditions and building occupancy and which also has a daily unoccupied period usually at night, when air conditioning is not required.

As with most typical air conditioning systems, the system of the present invention comprises a compressor which could be any of the known forms such as reciprocating, rotary, or centrifugal. The system also comprises a condenser which could be water cooled, air cooled, or evaporatively cooled as is most common in moderately sized building systems. An evaporator coil is also part of the system which, in use, is utilized to directly cool the air being supplied throughout the building. Necessary refrigerant expansion devices may also be provided as such components are commonly used in cooling systems. The air cooling system also includes a thermal storage means which may comprise a thermally insulated tank substantially filled with a phase change material, typically water. The tank is usually sealed to prevent losses of the phase change material due to evaporation. Further, the tank preferably includes tubing, preferably in the form of a coil wound within the tank and connected between and inlet and an outlet. Such tubing permits a fluid to flow throughout much of the tank without physically contacting the liquid contained in the tank other than in a thermal manner with the working fluid flowing through the tubing and the phase change material outside the tubing filling the volume of the tank.

In use and during the period when normal building cooling is required the air cooling system operates in Mode #1, wherein conventional cooling is provided up to the maximum compressor capacity. In such operation, known well in the art, the compressor outlets compressed working fluid gas to the evaporative condenser wherein the working fluid is condensed to a liquid. The working fluid exits the evaporative condenser and enters the evaporator coil, by way of an expansion device, wherein the air passing across the coil is chilled and moved throughout the building. The heat transferred to the partially vaporized working fluid completely vaporizes the remaining liquid in the presence of the relatively low pressure created by the compressor, and the working fluid as a gas flows to the compressor inlet to complete the cycle.

In the daily period when the building is not occupied and air conditioning is not required, the system can be operated in Mode #2. In such operation, the evaporator coil is switched out of the working fluid circuit and is replaced with the thermal storage unit. Accordingly, the working fluid liquid exiting the evaporative condenser passes through an expansion device and then, as a partially vaporized fluid at a subfreezing temperature, passes through the thermal storage unit thereby freezing the phase change material in the thermal storage unit. The heat transferred from the freezing phase change material completely vaporizes the working fluid in the presence of the relatively low pressure created by the compressor, and the working fluid gas flows to the compressor inlet to complete the cycle. When the desired amount of phase change material is frozen, the system can be shut down for the remainder of the unoccupied period.

On days when supplemental cooling is required, usually the hottest days of the year, the air cooling system will have been operated during the unoccupied building period in Mode #2 to thereby freeze the phase change material in the thermal storage unit. As the day begins, the air cooling system of the present invention can be operated in Mode #1 wherein conventional cooling is provided to the maximum compressor capacity. However, usually during the afternoon hours when the supplemental cooling is required, the system can be switched to operate in Mode #3. In such mode of operation, the outlet of working fluid from the evaporative condenser is passed first through the thermal storage unit for additional chilling and then to the evaporator coil. Accordingly, the phase change material, usually ice formed from freezing the water in the thermal storage unit tank, is gradually melted as the working fluid passing through the coil of the thermal storage unit is chilled. The additionally chilled working fluid passing into the evaporator coil from the thermal storage unit, by way of an expansion device, is capable of absorbing more heat from the chilled air before the fluid is fully vaporized and subsequently caused to flow to the compressor inlet. Accordingly, the additional degree of cooling is provided to keep the building at a desired temperature during such peak demand days. Typically, the compressor can be sized to only 75% of the system's maximum rating, with the extra 25% of capacity being provided by the thermal storage unit chilling process. Such full capacity can be provided for the entire time that ice remains in the thermal storage unit.

The air cooling system of the present invention provides several benefits. One such benefit is the reduced electricity demand due to overall smaller system sizing, overall smaller mechanical system component sizing, and the frequently encountered price penalties for electric demand during daytime hours and reduced pricing for electricity during the nighttime hours. Another advantage is that the thermal storage unit of the present invention is entirely integrated into the refrigeration circuit without the need for foreign fluids passing through such system. Accordingly, the system is not affected by corrosion due to improper chemistry control of a cooling water supply or foreign debris which may be contained in such supply. The entire air cooling system can be configured as a single unit, fully factory assembled. Accordingly, such unit is less costly to install than a system utilizing several separate components with necessary hookups and interconnections. Additionally, the present system does not require the use of a liquid overfeed system thereby reducing the system complexity and the first cost of the system components. Finally, the phase change material, usually water, used in the thermal storage unit can be partially melted and refrozen without concern for reliability or performance.

There will now be described, by way of example only, a preferred embodiment of the present invention with reference to the accompanying drawings in which:
Figure 1 is a schematic of an air cooling system in accordance with the present invention;
Figure 2 is a schematic of air cooling system in accordance with the present invention operating in Mode #1 for conventional cooling;
Figure 3 is a diagram showing the operating parameters of the air cooling system of the present invention in Mode #1;
Figure 4 is a schematic showing the air cooling system of the present invention operating in Mode #2 such that ice is formed in the thermal storage unit;
Figure 5 is a diagram showing the operating parameters of the air cooling system of the present invention in Mode #2 wherein ice is formed in the thermal storage unit;
Figure 6 is a schematic drawing of the air cooling system of the present invention operating in Mode #3 wherein supplemental cooling is required by the addition of the thermal storage unit to the cooling system, and
Figure 7 is a diagram showing the operating parameters of the air cooling system of the present invention operating in Mode #3 when additional cooling is required.

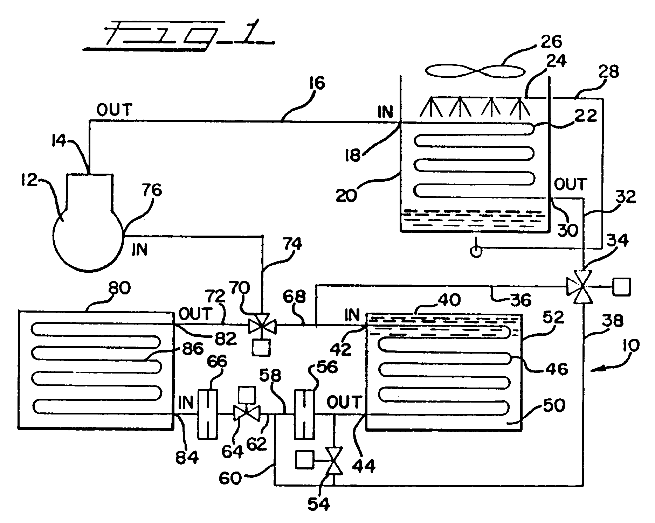

Referring now to Figure 1 of the drawings, an air cooling system in accordance with the present invention is shown generally at 10. The main components of such a system comprise a compressor 12 which may be a reciprocating, rotary, or centrifugal compressor. Compressor 12 has an outlet 14 which connects to tubing 16 providing for the outlet of a working fluid, usually a gaseous refrigerant, from compressor 12 to the inlet 18 of evaporative condenser 20. Evaporative condenser 20 can be a water cooled, air cooled or evaporatively cooled (as shown) condenser. Inlet 18 is connected to internal tubing 22 which forms a coil in evaporative condenser 20 exiting at 30. Cooling water 28 being recirculated from beneath the coil 22 exits through a sprayhead system 24 such that cooling water falls over coil 22. An appropriate fan mechanism 26 is usually also provided.

Outlet 30 from evaporative condenser 20 connects to tubing 32 which enters a valve 34. Valve 34 has two outlets, 35 and 38. Outlet 36 extends to inlet 42 of thermal storage unit 40 and valve 70. Outlet 38 extends to valve 54 and section 60 which extends to valve 64. Valve 54 connects to outlet 44 of thermal storage unit 40, which is actually the outlet of coil tubing 46 extending from inlet 42 to outlet 44. Coil tubing 46 typically comprises metallic or plastic tubing wound in a serpentine manner throughout the tank 52 of thermal storage unit 40 such that the majority of the phase change material or water 50 can be frozen around the outside of tubing 46.

Outlet 44 of thermal storage unit 40 also can enter an expansion device 56 which in turn has an outlet 58 connected to tubing section 60 and section 62. Outlet 62 is connected to valve 64 which in turn is connected to expansion device 66 which has an outlet 84 to inlet 84 of evaporator coil 80. Evaporator coil 80 includes internal tubing 86 which extends from inlet 84 to outlet 82. Outlet 82 of evaporator coil 80 extends via tubing to valve 70, which in turn has an outlet 74 extending to inlet 76 of compressor 12. Evaporator coil 80 also includes air movement means whereby air to be cooled is passed across coil 86 and thereby distributed throughout the building to which air cooling system 10 is connected.

Preferably, expansion devices 66 and 56 are thermostatic expansion valves which sense the pressure and temperature of the refrigerant gas leaving the evaporator 80 at 82 and leaving the thermal storage unit 40 at 42 and thereby control the flow of liquid refrigerant from line 32 into the evaporator 80 and into the thermal storage unit 40 to insure all the refrigerant is vaporized therein and to prevent damage to the compressor by liquid refrigerant. Sufficient refrigerant is intially charged into the system to ensure that liquid containing lines will be filled and into the evaporative condenser coil 22 in all modes of operation. Any variation in quantity of liquid refrigerant required from one condition to another is made up by maintaining an excess in the lower tubes of the evaporative condenser coil 22.

As is known in the art, alternative expansion devices such as orifices and capillary tubes may be applied to control refrigerant flow. Also external receivers may be employed to ensure that liquid containing lines are full and to provide for refrigerant quantity variation from condition to condition when it is deemed undersirable to store excess in the evaporative condenser coil 22.

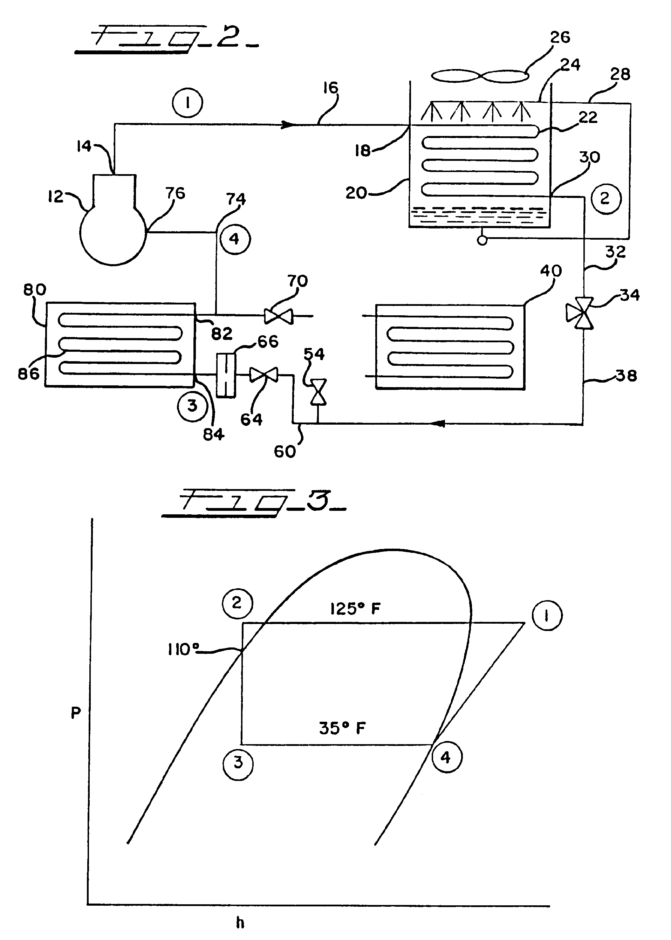

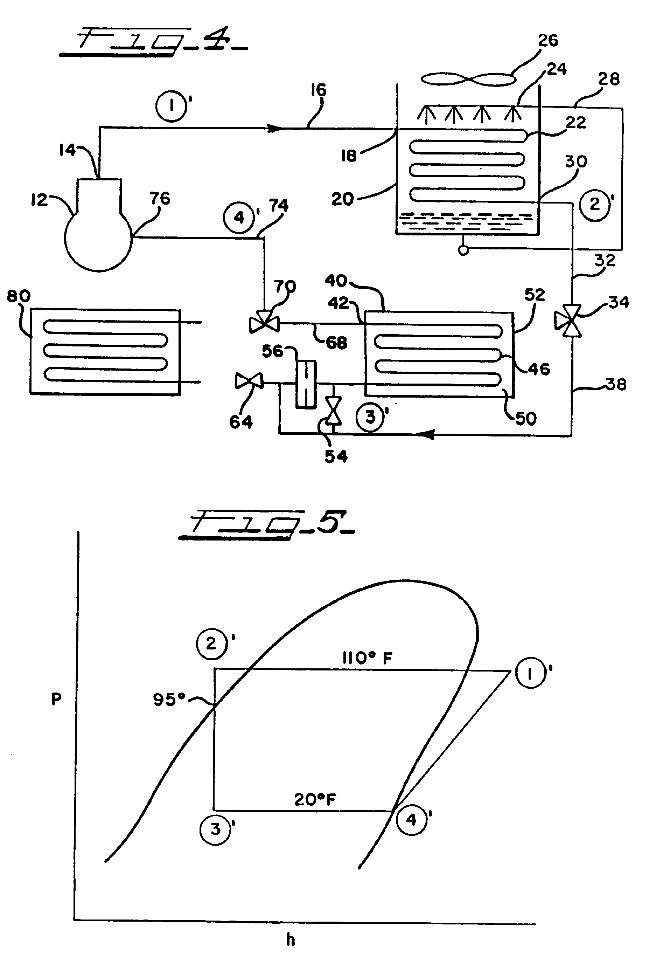

Referring now to Figures 2 and 3, Mode #1 of the air cooling system 10 will now be explained. Mode #1 provides conventional cooling to about 75% of the rated capacity of cooling system 10. In operation, outlet 14 of compressor 12 provides compressed working fluid, usually gaseous refrigerant, via line 16 to evaporative condenser 20. The cooled working fluid leaves outlet 30 of evaporator condenser 20 and passes through via line 32 through valve 34 and into line 38. From line 38 the pressurized and cooled working fluid passes through valve 64 and into expansion device 66. The expanded working fluid enters inlet 84 of evaporative coil 80 and passes through coil 86 thereby providing cooling to the air moving across coil 86. The warm and expanded working fluid leaves evaporative coil 80 at outlet 82 and enters lines 72 and 74 and inlet 76 of compressor 12. As can be seen, thermal storage unit 40 is bypassed in the Mode #1 operating condition for conventional cooling.

With reference now to Figure 2 and 3, an explanation of the operating parameters of Mode #1 will now be provided.

Figure 3 is a P-h diagram, showing the thermodynamic properties of the working fluid (refrigerant), having P, or pressure, as its ordinate and h, or enthalpy, as its abscissa. The curved line envelopes the properties of the fluid under saturated conditions with superheated gas to the right of the saturation envelope and subcooled liquid to the left of the saturation envelope.

Circled numbers in Figures 2 & 3 correspond to conditions Mode #1 described herein. At condition 1, the warm, high-pressure gas being discharged from the compressor, can be seen in Figure 3 to be superheated. As the gas passes into the coil 22 and is evaporatively cooled and caused to condense to a liquid at essentially a constant pressure, it can be seen on Figure 3 to emerge from the coil 22 at condition 2. The amount of heat that was liberated during the condensing process is proportional to the difference in h, or enthalpy, between conditions 1 and 2.

As the working fluid passes through the expansion device 66, it passes from condition 2 to condition 3. Since there is no heat content change in this process, h remains constant while the pressure decreases. The working fluid is now a saturated mixture of gas and liquid.

As the fluid subsequently flows into the evaporator coil 86 at a low saturation pressure, the heat it absorbs from the air passing over the coil causes the liquid component to boil and become entirely a gas. The difference in the h values between conditions 4 and 3 is proportional to the amount of useful heat being transferred from the air to the working fluid.

Upon reaching she compressor at condition 4, the working fluid gas is again compressed to condition 1, wherein the difference in the h values between conditions 1 and 4 is proportional to the amount of work expended by the compressor to achieve the compression.

The above describes what is known in the art as a conventional refrigeration cycle. A condensing temperature of 51.7°C (125° F) and an evaporating temperature of 1.7°C (35° F) are shown as typical.

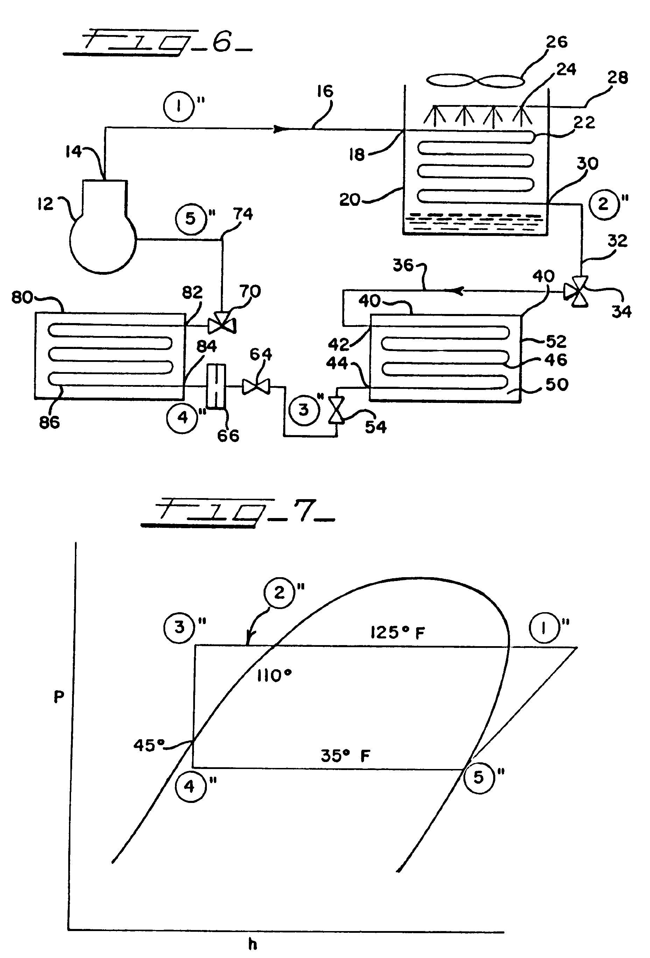

Referring now to Figure 4, the operation of the air cooling system of the present invention in Mode #2, wherein no cooled air would be provided from the system to the building and ice would be formed in the thermal storage unit will now be provided. Compressor 12 provides at its outlet 14 compressed working fluid, usually a gaseous refrigerant, along line 16 to inlet 18 of evaporative condenser 20. Condensed and cooled working fluid exits evaporative condenser 20 at outlet 30 and is supplied along 32 through valve 34 to line 38 and line 60 to expansion device 56. The expanded cooled working fluid enters outlet 44 of thermal storage unit 40 and flows along coil 40 to inlet 42 of thermal storage unit 40. In passing the expanded cooled working fluid through coil 36, the phase change material, usually water 50, is frozen around the outside of coil 46. The working fluid leaves inlet 42 and passes through line 68 through valve 70 into line 74 and into inlet 76 of compressor 12. Upon the formation of the desired amount of ice around coils 46 which normally would comprise the majority of the water 50, the air cooling system 10 is shut down for the remainder of the evening. Note that in Mode #2, the ice forming mode, evaporator coil 80 is not included in the routing of the working fluid through air cooling system to by appropriate positioning of the valves.

Referring now to Figure 4 and 5, circled numbers in Figures 4 and 5 correspond to conditions in Mode #2 described herein. Warm compressed gas from the compressor at condition 1' flows into the coil 22 and is condensed and cooled a approximately a constant pressure. A condensing condition 43.3°C (110°F) is now shown indicating this operation to be during the night when useful building cooling is not required and when ambient conditions are more moderate. The condensed liquid emerges from coil 22 at condition 2', passes through expansion device 56 and enters the coil 46 at condition 3'. Under this mode of operation, the pressure and corresponding saturation temperature in the coil must be lower than in Mode #1 in order to cause heat to flow to the boiling refrigerant liquid component from the freezing ice.

Upon becoming all gas and after absorbing heat from the freezing water, the working fluid emerges from the coil at condition 4' and is compressed once again to condition 1'.

Referring now to Figure 6, an explanation of operating Mode #3 of air cooling system 10, which involves the use of thermal storage unit 40 in the air cooling system during operation, will now be provided. Compressor 12 provides compressed working fluid at its outlet 14 which is supplied via lines 16 to inlet 18 of evaporative condenser 20. Condensed and cooled working fluid exits condenser 20 at outlet 30 and passes along line 32 to valve 34 and then along line 36 to inlet 42 of thermal storage unit 40. Working fluid passes along coil 46 through frozen water 50 thereby melting frozen water 50 which has built up upon coil 46 thereby further chilling working fluid as it passes through coil 46. Such further chilled working fluid exits thermal storage unit 40 at outlet 44 and passes through valve 54 and 64 into expansion device 66. The expanded and chilled working fluid enters evaporator coil 80 at inlet 84 and passes through coil 86 and exits evaporator coil at outlet 82. The warmed and expanded working fluid passes through valve 70 and line 74 back into inlet 76 of compressor 12. Air passing across coil 86 of evaporator coil 80 is provided with enhanced cooling due to the lower entry temperature of working fluid when it enters inlet 84 as opposed to the operation in Mode #1. This enhanced cooling provides approximately 25% additional capacity to air cooling system 10 thereby permitting air cooling system 10 to provide its rated cooling capacity.

Referring now to Figures 6 and 7, a description of the operating parameters of Mode #3 will now be provided. Circled numbers in Figures 6 and 7 correspond to conditions in Mode #3 described herein.

As in Mode #1 operation, the compressed gaseous working fluid leaves the compressor at condition 1'', passes into the evaporative condenser and is condensed to a liquid and is further cooled to condition 2''. But in contrast to Mode #1 operation, the high pressure liquid now passes through the coil of the thermal storage unit causing it to be cooled even further to condition 3'' by the melting ice.

The cold liquid passes through the expansion device 66 and flows to the evaporator at condition 4''. At condition 4'' and in contrast to Mode #1 operation, the working fluid is nearly all liquid with a much smaller component of gas. This is evident by the h value which is lower than in Mode #1. With more liquid fluid to boil, the fluid absorbs much more heat from the air passing over the evaporator coil as it transforms from condition 4'' to condition 5'', approximately 25% more.

At condition 5'', the fully gasified fluid is once more compressed by the compressor to condition 1.

The air cooling system of the present invention can accordingly operate in three different modes. In Mode #1, the air cooling system operates as an ordinary air conditioning system having a compressor 12, evaporative condenser 20, and evaporator coil 80. Such a system can be designed to provide the air conditioning needs of a building during the majority of the days during which air conditioning is needed. Lower electricity costs during the operating season are provided at essentially no increase in capital costs due to the smaller compressor and smaller evaporative condenser offsetting the added cost of the thermal storage unit. The evaporator coil is identical with that of the conventional system since it must be sized for the maximum building load in both cases. In Mode #2, when the building is not occupied and no air conditioning need be provided, air cooling system 10 can be operated with compressor 12, evaporative condenser 20 and thermal storage unit 40 operating in series with evaporative coil 80 not included in the path of the operating system. Such operation provides extra chilled working fluid to the thermal storage unit 40 thereby freezing water around the coils 46 of thermal storage unit 40. When sufficient ice is formed around coils 46, the air cooling system is shut down for the rest of the night. In Mode #3, which is utilized only during those days and times when the full rated cooling capacity of air cooling system 10 is necessary, extra cooled air is provided by air cooling system 10. Such cooling is provided with the operation of compressor 12, evaporative condenser 20, thermal storage unit 40, and evaporative coil 80 operating in series. Working fluid entering thermal storage unit 40 is further chilled due to the ice surrounding coils 46 in thermal storage unit 40 thereby providing extra chilled fluid to evaporative coil 80. Accordingly, air passing across evaporative coil 80 is supplementally chilled to the full rated capacity of air cooling system 10 thereby providing the building the supplemental cooling needed to meet the cooling load of the hottest days of the year. Such additional cooling is provided without sizing of air conditioning system 10 with compressors and, evaporative condensers rated to meet such extreme demands, but rather, such components need only be sized to about 75% of such peak demands with the extra 25% of cooling provided by the thermal storage unit 40.

## Claims

1. A cooling system comprising
a compressor means (12) having an inlet (76) and an outlet (14) for a working fluid,
a condenser means (20) having an inlet (18) and an outlet (30) for a working fluid,
an evaporator means (80) having an inlet (84) and an outlet (82) for a working fluid,
and a thermal storage means (40) having an inlet (42) and an outlet (44) for a working fluid,
the compressor means outlet (14) being connected to the condenser means inlet (18), and the system further comprising means for selecting one of three modes of operation, the modes comprising:
a first mode wherein the condenser means outlet (30) is connected to the evaporator means inlet (84) bypassing the thermal storage means (40);
a second mode wherein the condenser means outlet (30) is connected to the thermal storage means, the thermal storage means being connected to the compressor means inlet (76) bypassing the evaporator means (80);
a third mode wherein the condenser means outlet (30) is connected to the thermal storage means inlet (42), the thermal storage means outlet (44) being connected to the evaporator means inlet (84);
and characterised in that in the second mode, the condenser means outlet (30) is connected to the thermal storage means outlet (44) and the thermal storage means inlet (42) is connected to the compressor means inlet (76), such that in the second mode the direction of flow of the working fluid through the thermal storage means (40) is opposite to the direction of flow in the third mode.

2. A cooling system as claimed in claim 1, wherein the means for selecting comprises valve means (34, 54, 64, 70) operable such that in the third mode of operation the condenser means (20), thermal storage means (40), evaporator means (80) and compressor means (12) are connected in series or such that in the second mode of operation the condenser means (20), thermal storage means (40) and compressor means (12) are connected in series or such that in the first mode of operation the condenser means (20), evaporator means (80) and compressor means (12) are connected in series, as desired.

3. A cooling system as claimed in any preceding claim wherein the thermal storage means (40) comprises tubing (46) within a tank (52) containing a liquid (50), with the tubing routed through the tank such that a substantial portion of its length is under the liquid.

4. A cooling system as claimed in claim 3 wherein the tubing (46) is routed through the tank (52) such that a majority of the liquid (50) can be frozen around the tubing.

5. A cooling system as claimed in claim 3 or 4 wherein the storage means tubing (46) is a coil forming a serpentine path within said tank (52).

6. A cooling system as claimed in any one of claims 1 to 5 wherein the working fluid is a liquid refrigerant.

7. A cooling system as claimed in any of claims 1 to 6 wherein the liquid in the thermal storage means tank (52) is water.

8. The cooling system as claimed in any preceding claim further comprising an expansion device (66) at the inlet of the evaporator means.

9. The cooling system as claimed in any preceding claim further comprising an expansion device at the outlet of the thermal storage means (56).

10. The cooling system as claimed in any preceding claim wherein the condenser means (20) includes a condenser coil (22) through which a working fluid passes, and the evaporator means (80) includes an evaporator coil (86) through which the working fluid passes.

11. The cooling system as claimed in any preceding claim further comprising receiver means to ensure that the liquid containing lines are full.

12. A method for providing supplemental cooling for an air conditioning system comprising the steps of:
storing cooling capacity, during periods of no cooling demand, by flowing a working fluid output from a condenser means (20) through a thermal storage means (40) before inputting the working fluid to a compressor means (12), bypassing an evaporator means (80); and
further cooling the working fluid, during periods of high cooling demand, by flowing the working fluid output from the condenser means (20) through the thermal storage means (40) to sub-cool the working fluid, before inputting the working fluid to the compressor means (12) via the evaporator means (80); and characterised in that:
in the step of further cooling the working fluid, the working fluid flows through the thermal storage means in a direction opposite to the direction of flow through the thermal storage means during the step of storing cooling capacity.

13. A method of cooling air as claimed in claim 12 wherein during the step of storing cooling capacity, when the working fluid is flowing through the thermal storage means (40) bypassing the evaporator means, liquid (50) in the thermal storage means is frozen around the outside of tubing (46) through which the working fluid is flowing.

14. A method of cooling air as claimed in any of claims 12 to 13 wherein during the step of further cooling the working fluid, when the working fluid is passing through the thermal storage means (40) and the evaporator means (80), air passed across the evaporator means is subjected to a greater degree of cooling as the working fluid passing through the thermal storage means (40) is chilled as it passes through tubing (46) on the outside of which frozen liquid has been formed.

15. A method of cooling air as claimed in any of claims 12 to 14 wherein the thermal storage means (40) comprises a tank (52) containing a liquid (50) and the liquid comprises water.

16. A method of cooling air as claimed in any of claims 12 to 14 wherein the thermal storage means (40) comprises a tank (52) containing liquid (50) and the liquid comprises a phase change material such as an eutectic salt.

17. A method of cooling air as claimed in any of claims 12 to 16 further comprising the step of passing the working fluid through receiver means to ensure that the liquid containing lines are full.

## Patentansprüche

1. Kühlanlage mit
einer Kompressoranordnung (12), die einen Einlaß (76) und einen Auslaß (14) für ein Arbeitsfluid aufweist,
einer Kondensatoranordnung (20), die einen Einlaß (18) und einen Auslaß (30) für ein Arbeitsfluid aufweist,
einer Verdampferanordnung (80), die einen Einlaß (84) und einen Auslaß (82) für ein Arbeitsfluid aufweist,
und einer Wärmespeicheranordnung (40), die einen Einlaß (42) und einen Auslaß (44) für ein Arbeitsfluid aufweist,
wobei der Auslaß (14) der Kompressoranordnung mit dem Einlaß (18) der Kondensatoranordnung verbunden ist und die Anlage ferner mit einer Anordnung zur Auswahl einer von drei Betriebsarten versehen ist, die umfassen:
eine erste Betriebsart, in welcher der Auslaß (30) der Kondensatoranordnung unter Umgehung der Wärmespeicheranordnung (40) mit dem Einlaß (84) der Verdampferanordnung verbunden ist;
eine zweite Betriebsart, in welcher der Auslaß (30) der Kondensatoranordnung mit der Wärmespeicheranordnung verbunden ist und die Wärmespeicheranordnung unter Umgehung der Verdampferanordnung (80) mit dem Einlaß (76) der Kompressoranordnung verbunden ist;
eine dritte Betriebsart, in welcher der Auslaß (30) der Kondensatoranordnung mit dem Einlaß (42) der Wärmespeicheranordnung verbunden ist und der Auslaß (44) der Wärmespeicheranordnung mit dem Einlaß (84) der Verdampferanordnung verbunden ist;
dadurch gekennzeichnet, daß in der zweiten Betriebsart der Auslaß (30) der Kondensatoranordnung mit dem Auslaß (44) der Wärmespeicheranordnung verbunden ist und der Einlaß (42) der Wärmespeicheranordnung mit dem Einlaß (76) der Kompressoranordnung verbunden ist, so daß in der zweiten Betriebsart die Strömungsrichtung des Arbeitsfluids durch die Wärmespeicheranordnung (40) entgegengesetzt der Strömungsrichtung in der dritten Betriebsart ist.

2. Kühlanlage nach Anspruch 1, wobei die Anordnung zur Auswahl eine Ventilanordnung (34, 54, 64, 70) aufweist, die derart betätigbar ist, daß nach Wunsch in der dritten Betriebsart die Kondensatoranordnung (20), die Wärmespeicheranordnung (40), die Verdampferanordnung (80) und die Kompressoranordnung (12) in Reihe geschaltet sind, oder daß in der zweiten Betriebsart die Kondensatoranordnung (20), die Wärmespeicheranordung (40) und die Kompressoranordnung (12) in Reihe geschaltet sind, oder daß in der ersten Betriebsart die Kondensatoranordnung (20), die Verdampferanordnung (80) und die Kompressoranordnung (12) in Reihe geschaltet sind.

3. Kühlanlage nach einem der vorhergehenden Ansprüche, wobei die Wärmespeicheranordnung (40) eine Rohrleitung (46) innerhalb eines eine Flüssigkeit (50) enthaltenden Tanks (52) aufweist, wobei die Rohrleitung derart durch den Tank hindurchgeführt ist, daß ein wesentlicher Teil der Längsabmessung der Rohrleitung in die Flüssigkeit eintaucht.

4. Kühlanlage nach Anspruch 3, wobei die Rohrleitung (46) derart durch den Tank (52) hindurchgeführt ist, daß ein größerer Teil der Flüssigkeit (50) um die Rohrleitung herum zum Gefrieren gebracht werden kann.

5. Kühlanlage nach Anspruch 3 oder 4, wobei die Rohrleitung (46) der Speicheranordnung eine Schlange ist, die innerhalb des Tanks (52) einen serpentinenförmigen Weg bildet.

6. Kühlanlage nach einem der Ansprüche 1 bis 5, wobei das Arbeitsfluid ein flüssiges Kältemittel ist.

7. Kühlanlage nach einem der Ansprüche 1 bis 6, wobei die Flüssigkeit in dem Tank (52) der Wärmespeicheranordnung Wasser ist.

8. Kühlanlage nach einem der vorhergehenden Ansprüche, ferner versehen mit einer Expansionsvorrichtung (66) am Einlaß der Verdampferanordnung.

9. Kühlanlage nach einem der vorhergehenden Ansprüche, ferner versehen mit einer Expansionsvorrichtung (56) am Auslaß der Wärmespeicheranordnung.

10. Kühlanlage nach einem der vorhergehenden Ansprüche, wobei die Kondensatoranordnung (20) eine Kondensatorschlange (22) aufweist, durch die ein Arbeitsfluid hindurchtritt, und die Verdampferanordnung (80) eine Verdampferschlange (86) aufweist, durch die das Arbeitsfluid hindurchtritt.

11. Kühlanlage nach einem der vorhergehenden Ansprüche, ferner versehen mit einer Sammelanordnung, die sicherstellt, daß die Flüssigkeit enthaltenden Leitungen voll sind.

12. Verfahren zum Bereitstellen von zusätzlicher Kühlung für eine Klimaanlage, bei dem:
während Perioden ohne Kühlbedarf Kühlkapazität gespeichert wird, indem ein von einer Kondensatoranordnung (20) abströmendes Arbeitsfluid unter Umgehung einer Verdampferanordnung (80) durch eine Wärmespeicheranordnung (40) hindurchgeleitet wird, bevor das Arbeitsfluid in eine Kompressoranordnung (12) eingeleitet wird; und
während Perioden hohen Kühlbedarfs das Arbeitsfluid weiter gekühlt wird, indem das von der Kondensatoranordnung (20) abströmende Arbeitsfluid zwecks Unterkühlung des Arbeitsfluids durch die Wärmespeicheranordnung (40) hindurchgeleitet wird, bevor das Arbeitsfluid über die Verdampferanordnung (80) in die Kompressoranordnung (12) eingeleitet wird; dadurch gekennzeichnet, daß:
in dem Verfahrensschritt der weiteren Kühlung des Arbeitsfluids das Arbeitsfluid durch die Wärmespeicheranordnung in einer Richtung hindurchströmt, die der Richtung der Strömung durch die Wärmespeicheranordnung während des Verfahrensschrittes der Speicherung von Kühlkapazität entgegengesetzt ist.

13. Verfahren zum Kühlen von Luft nach Anspruch 12, wobei während des Verfahrensschrittes der Speicherung von Kühlkapazität beim Hindurchströmen von Arbeitsfluid durch die Wärmespeicheranordnung (40) unter Umgehung der Verdampferanordnung Flüssigkeit (50) in der Wärmespeicheranordnung um die Außenseite einer Rohrleitung (46) herum zum Gefrieren gebracht wird, durch welche das Arbeitsfluid strömt.

14. Verfahren zum Kühlen von Luft nach Anspruch 12 oder 13, wobei während des Verfahrensschrittes der weiteren Kühlung des Arbeitsfluids beim Hindurchströmen des Arbeitsfluids durch die Wärmespeicheranordnung (40) und die Verdampferanordnung (80) über die Verdampferanordnung geleitete Luft einer stärkeren Abkühlung ausgesetzt wird, während das durch die Wärmespeicheranordnung (40) hindurchtretende Arbeitsfluid beim Durchlaufen von Rohrleitung (46) stark abgekühlt wird, auf deren Außenseite gefrorene Flüssigkeit ausgebildet wurde.

15. Verfahren zum Kühlen von Luft nach einem der Ansprüche 12 bis 14, wobei die Wärmespeicheranordnung (40) einen Tank (52) aufweist, der eine Flüssigkeit (50) enthält, und die Flüssigkeit Wasser aufweist.

16. Verfahren zum Kühlen von Luft nach einem der Ansprüche 12 bis 14, wobei die Wärmespeicheranordnung (40) einen Tank (52) aufweist, der Flüssigkeit (50) enthält, und die Flüssigkeit ein Phasenumwandlungsmaterial, beispielsweise ein eutektisches Salz, aufweist.

17. Verfahren zum Kühlen von Luft nach einem der Ansprüche 12 bis 16, bei dem im Zuge eines weiteren Verfahrensschrittes das Arbeitsfluid durch eine Sammelanordnung hindurchgeleitet wird, um zu gewährleisten, daß die Flüssigkeit enthaltenden Leitungen voll sind.

## Revendications

1. Système de refroidissement comprenant
un moyen de compresseur (12) ayant une admission (76) et une sortie (14) pour un fluide de fonctionnement,
un moyen de condenseur (20) ayant une admission (18) et une sortie (30) pour un fluide de fonctionnement,
un moyen d'évaporateur (80) ayant une admission (84) et une sortie (82) pour un fluide de fonctionnement,
et un moyen d'accumulation thermique (40) ayant une admission (42) et une sortie (44) pour un fluide de fonctionnement,
la sortie (14) du moyen de compresseur étant branchée à l'admission (18) du moyen de condenseur et le système comprenant en outre des moyens pour sélectionner un de trois modes de fonctionnement, les modes comprenant:
un premier mode dans lequel la sortie (30) des moyens de condenseur est branchée à l'admission (84) des moyens d'évaporateur évitant les moyens d'accumulation thermique (40);
un deuxième mode dans lequel la sortie (30) du moyen de condenseur est branchée au moyen d'accumulation thermique, le moyen d'accumulation thermique étant branché à l'admission (76) du moyen de compresseur évitant le moyen d'évaporateur (80);
un troisième mode dans lequel la sortie (30) du moyen de condenseur est branchée à l'admission (42) du moyen d'accumulation thermique, la sortie (44) du moyen d'accumulation thermique étant branchée à l'admission (84) du moyen d'évaporateur;
et caractérisé en ce que dans le deuxième mode, la sortie (30) du moyen de condenseur est branchée à la sortie (44) du moyen d'accumulation thermique et l'admission (42) du moyen d'accumulation thermique est branchée à l'admission (76) du moyen de compresseur, de sorte que dans le deuxième mode le sens de circulation du fluide de fonctionnement à travers le moyen d'accumulation thermique (40) est opposé au sens de circulation dans le troisième mode.

2. Système de refroidissement suivant la revendication 1, dans lequel les moyens de sélection comprend des moyens de vanne (34, 54, 64, 70) qui peuvent fonctionner de telle sorte que dans le troisième mode de fonctionnement le moyen de condenseur (20), le moyen d'accumulation thermique (40), le moyen d'évaporateur (80) et le moyen de compresseur (12) sont branchés en série ou de telle sorte que dans le deuxième mode de fonctionnement le moyen de condenseur (20), le moyen d'accumulation thermique (40) et le moyen de compresseur (12) sont branchés en série ou de telle sorte que dans le premier mode de fonctionnement le moyen de condenseur (20), le moyen d'évaporateur (80) et le moyen de compresseur (12) sont branchés en série, comme on le désire.

3. Système de refroidissement suivant l'une quelconque des revendications précédentes, dans lequel le moyen d'accumulation thermique (40) comprend une tuyauterie (46) à l'intérieur d'un réservoir (52) contenant un liquide (50), la tuyauterie suivant un chemin tel à travers le réservoir qu'une partie importante de sa longueur se trouve sous le liquide.

4. Système de refroidissement suivant la revendication 3, dans lequel la tuyauterie (46) suit un chemin tel à travers le réservoir (52) que la plus grande partie du liquide (50) peut être gelée autour de la tuyauterie.

5. Système de refroidissement suivant la revendication 3 ou 4, dans lequel la tuyauterie du moyen d'accumulation (46) est une bobine formant un chemin en serpentin à l'intérieur dudit réservoir (52).

6. Système de refroidissement suivant l'une quelconque des revendications 1 à 5, dans lequel le fluide de fonctionnement est un liquide réfrigérant.

7. Système de refroidissement suivant l'une quelconque des revendications 1 à 6, dans lequel le liquide dans le réservoir du moyen d'accumulation thermique (52) est de l'eau.

8. Système de refroidissement suivant l'une quelconque des revendications précédentes, comprenant en outre un dispositif d'expansion (66) à l'admission du moyen d'évaporateur.

9. Système de refroidissement suivant l'une quelconque des revendications précédentes, comprenant un dispositif d'expansion à la sortie du moyen d'accumulation thermique (56).

10. Système de refroidissement suivant l'une quelconque des revendications précédentes dans lequel le moyen de condenseur (20) comprend une bobine de condenseur (22) à travers laquelle passe un fluide de fonctionnement et le moyen d'évaporateur (80) comprend une bobine d'évaporateur (86) à travers laquelle passe le fluide de fonctionnement.

11. Système de refroidissement suivant l'une quelconque des revendications précédentes, comprenant un moyen de récepteur pour garantir que les conduites contenant le liquide sont remplies.

12. Procédé pour fournir un refroidissement supplémentaire pour un système de conditionnement d'air comprenant les étapes:
d'accumulation d'une capacité thermique, pendant les périodes sans demande de refroidissement, en faisant circuler un fluide de fonctionnement sortant d'un moyen de condenseur (20) à travers un moyen d'accumulation thermique (40) avant de faire entrer le fluide de fonctionnement dans un moyen de compresseur (12) en évitant un moyen d'évaporateur(80); et
de refroidissement supplémentaire du fluide de fonctionnement, pendant les périodes de forte demande de refroidissement, en faisant circuler le fluide de fonctionnement sortant du moyen de condenseur (20) à travers le moyen d'accumulation thermique (40) pour refroidir de manière supplémentaire le fluide de fonctionnement, avant de faire entrer le fluide de fonctionnement dans le moyen de compresseur (12) via le moyen d'évaporateur (80); et caractérisé en ce que:
dans l'étape de refroidissement supplémentaire du fluide de fonctionnement, le fluide de fonctionnement circule à travers le moyen d'accumulation thermique dans une direction opposée à la direction de circulation à travers le moyen d'accumulation thermique pendant l'étape d'accumulation de capacité de refroidissement.

13. Procédé de refroidissement d'air suivant la revendication 12 dans lequel pendant l'étape d'accumulation de la capacité thermique, lorsque le fluide de fonctionnement circule à travers le moyen d'accumulation thermique (40) en évitant le moyen d'évaporateur, le liquide (50) dans le moyen d'accumulation thermique est gelé autour de l'extérieur d'une tuyauterie (46) à travers laquelle le fluide de fonctionnement circule.

14. Procédé de refroidissement d'air suivant l'une quelconque des revendications 12 ou 13, dans lequel pendant l'étape de refroidissement supplémentaire du fluide de fonctionnement, lorsque le fluide de fonctionnement traverse le moyen d'accumulation thermique (40) et le moyen d'évaporateur (80), l'air passant à travers le moyen d'évaporateur est soumis à un niveau de refroidissement plus élevé que le fluide de fonctionnement passant à travers le moyen d'accumulation thermique (40) est réfrigéré lorsqu'il traverse la tuyauterie (46) sur l'extérieur de laquelle du liquide gelé s'est formé.

15. Procédé de refroidissement d'air suivant l'une quelconque des revendications 12 ou 14, dans lequel le moyen d'accumulation thermique (40) comprend un réservoir (52) contenant un liquide (50) et le liquide comprend de l'eau.

16. Procédé de refroidissement d'air suivant l'une quelconque des revendications 12 ou 14, dans lequel le moyen d'accumulation thermique (40) comprend un réservoir (52) contenant un liquide (50) et le liquide comprend un matériau à changement de phase tel qu'un sel eutectique.

17. Procédé de refroidissement d'air suivant l'une quelconque des revendications 12 ou 16, comprenant en outre l'étape de passage du fluide de fonctionnement à travers le moyen de récepteur pour garantir que les conduites contenant le liquide sont remplies.
